# EUROPEAN PATENT APPLICATION

(11) **EP 2 720 010 A1**
(43) Date of publication of application: **16.04.2014**
(21) Application number: 13183107.5
(22) Date of filing: 05.09.2013
(51) Int. Cl.: G01H 1/00, G01M 13/02

(54) **Monitoring system, monitor, and method for monitoring a rotating device**

(30) Priority: 14.09.2012 US 201213618878
(71) Applicant: General Electric Company, Schenectady, New York 12345 (US)
(72) Inventor: Hess, Dustin Delany, Minden, NV Nevada 89423 (US); Robert, Joseph Donald, Minden, NV Nevada 89423 (US); Roylance, James Merrill, Minden, NV Nevada 89423 (US); Richetta, Paul Foster, Minden, NV Nevada 89423 (US); Kidd, Michael Lee, Minden, NV Nevada 89423 (US)
(74) Representative: Picker, Madeline Margaret

(57) **Abstract**

A monitoring system (130) for use in monitoring operation of a rotating device (100) includes a first monitor (202) including a first processor (208). The first monitor is configured to receive a phase reference signal from a rotation sensor (144), wherein the phase reference signal is indicative of a phase of rotation of the rotating device, generate a timestamp indicative of a time at which the phase reference signal was received, and generate a synchronization message including the timestamp and an indication that the phase reference signal was received. The monitoring system also includes a second monitor (204) operatively coupled to the first monitor and comprising a second processor. The second monitor is configured to receive the synchronization message from the first monitor and synchronously sample at least one measurement based on the synchronization message.

## Description

The subject matter disclosed herein relates generally to monitoring systems and, more specifically, to a monitoring system, a monitor, and a method for monitoring a rotating device.

Known machines may exhibit vibrations or other behavior during operation. Sensors may be used to measure such behavior and to determine, for example, an amount of vibration exhibited in a rotating shaft, a rotational position or displacement of the shaft, and/or other suitable operational characteristics of a machine or motor. Often, the sensors are coupled to a monitoring system that includes a plurality of monitors. The monitors receive signals that are representative of operational characteristics of the machine or motor sensed by the sensors, and transmits those measurements to a diagnostic platform that displays the measurements in a form usable by a user.

However, at least some monitoring systems that monitor large machines include sensors and/or monitors that are distant from each other. In order to maintain an ability to synchronously sample data received from each of the sensors, each monitor typically receives a rotation signal from a rotation sensor coupled to the monitor. The rotation signals enable each monitor to synchronize the sampling of the measurement signals with respect to a rotation of the drive shaft or other rotating component being measured. However, due to the large distances that may separate monitors and/or sensors, it may be difficult and/or costly to provide a rotation sensor and/or a rotation sensor signal for each monitor.

In one embodiment, a monitoring system for use in monitoring operation of a rotating device is provided that includes a first monitor including a first processor. The first monitor is configured to receive a phase reference signal from a rotation sensor, wherein the phase reference signal is indicative of a phase of rotation of the rotating device, generate a timestamp indicative of a time at which the phase reference signal was received, and generate a synchronization message including the timestamp and an indication that the phase reference signal was received. The monitoring system also includes a second monitor operatively coupled to the first monitor and comprising a second processor. The second monitor is configured to receive the synchronization message from the first monitor and synchronously sample at least one measurement based on the synchronization message.

In another embodiment, a monitor for use in monitoring operation of a rotating device is provided that includes a communication device and a processor coupled to the communication device. The communication device is configured to receive a synchronization message including an indication that a phase reference signal was received and a timestamp indicative of a time at which the phase reference signal was received, wherein the phase reference signal is indicative of a phase of rotation of the rotating device. The processor is configured to receive the synchronization message from the communication device and synchronously sample the measurement signal based on the synchronization message. The measurement signal is received from a sensor configured to measure a characteristic of the rotating device.

In yet another embodiment, a method of monitoring operation of a rotating device is provided that includes receiving, by a first monitor, a phase reference signal from a rotation sensor, wherein the phase reference signal is indicative of a phase of rotation of the rotating device. The method also includes generating, by the first monitor, a timestamp indicative of a time at which the phase reference signal was received, and generating, by the first monitor, a synchronization message including the timestamp and an indication that the phase reference signal was received. The method further includes receiving the synchronization message from the first monitor at a second monitor operatively coupled to the first monitor, and synchronously sampling, by the second monitor, at least one measurement based on the synchronization message.
FIG. 1 is a schematic illustration of an exemplary rotating device.
FIG. 2A is a cross-sectional view of a component of the rotating device shown in FIG. 1 taken along lines A-A.
FIG. 2B is a cross-sectional view of the component of the rotating device shown in FIG. 1 taken along lines B-B.
FIG. 2C is a cross-sectional view of the component of the rotating device shown in FIG. 1 taken along lines C-C.
FIG. 3 is a block diagram of an exemplary monitoring system that may be used with the rotating device shown in FIG. 1.
FIG. 4 is a flow diagram of an exemplary method that may be used in monitoring operation of the rotating device shown in FIG. 1.

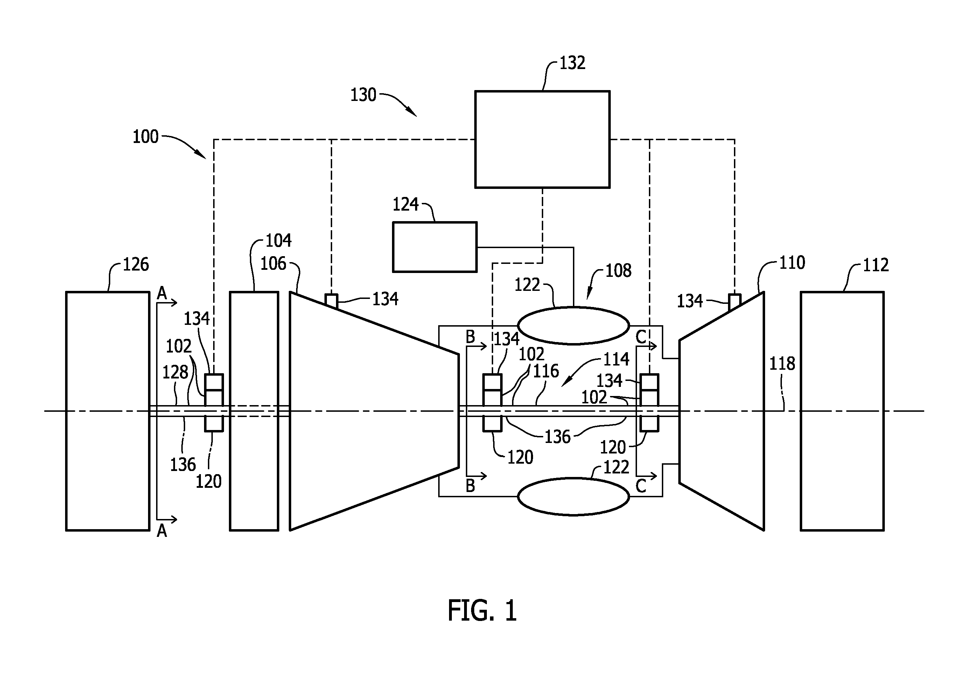

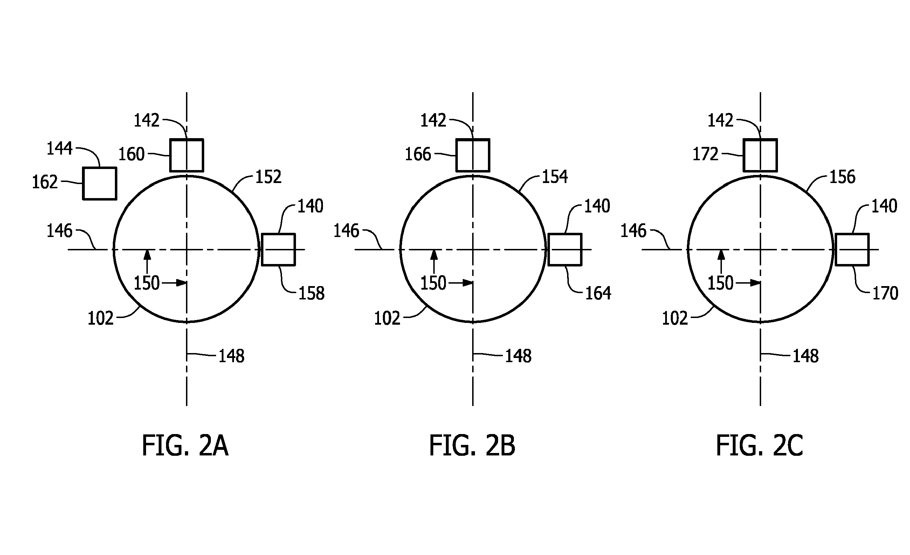

FIG. 1 is a schematic view of an exemplary asset, such as rotating device 100. FIG. 2A is a cross-sectional view of one of a plurality of components 102 used within rotating device 100 taken along line A-A. FIG. 2B is a cross-sectional view of component 102 taken along line B-B. FIG. 2A is a cross-sectional view of component 102 taken along line C-C.

In the exemplary embodiment, rotating device 100 is a turbine engine system 100 that includes an intake section 104, a compressor section 106 coupled downstream from intake section 104, a combustor section 108 coupled downstream from compressor section 106, a turbine section 110 coupled downstream from combustor section 108, and an exhaust section 112. A shaft assembly 114 is coupled to turbine section 110 and compressor section 106 and includes a drive shaft 116 that extends between turbine section 110 and compressor section 106 along a centerline axis 118. A plurality of support elements, such as a plurality of bearings 120, rotatably supports drive shaft 116. Combustor section 108 includes a plurality of combustors 122. Combustor section 108 is coupled to compressor section 106 such that each combustor 122 is in flow communication with compressor section 106.

A fuel assembly 124 is coupled to each combustor 122 to provide a flow of fuel to combustor 122. Turbine section 110 is rotatably coupled to compressor section 106 and to an electrical generator 126 via drive shaft 116. Compressor section 106 and turbine section 110 each include at least one rotor blade or compressor blade (not shown) that is coupled to shaft assembly 114. Shaft assembly 114 includes a shaft 128 that is coupled to generator 126 and that imparts a power loading to generator 126 during operation of rotating device 100. Generator 126 is coupled to a power source, such as for example, an electric utility grid (not shown) for distributing electrical power to the utility grid. Alternatively, rotating device 100 may have other configurations and use other types of components. For example, rotating device 100 may be, or may include, at least one gas turbine engine, another type of turbine and/or machine, and/or another type of power generation equipment that enables rotating device 100 to function as described herein.

In the exemplary embodiment, a monitoring system 130 includes at least one monitoring device or monitor 132 and a plurality of sensors 134 coupled to monitor 132. Moreover, in the exemplary embodiment, sensors 134 are coupled to, or are positioned proximate to, a plurality of components 102 of rotating device 100, such as a plurality of segments 136 of drive shaft 116 and/or of shaft 128. Alternatively or additionally, sensors 134 may be coupled to, or positioned proximate to, other components 102 such as, but not limited to, bearings 120.

Sensors 134, in the exemplary embodiment, include at least one horizontal vibration or proximity sensor 140, at least one vertical vibration or proximity sensor 142, and at least one rotation sensor 144. Alternatively, sensors 134 may include any other type and/or number of sensors that enables monitoring system 130 to function as described herein. In the exemplary embodiment, at least one horizontal proximity sensor 140 is positioned in close proximity to each component 102 to detect a position and/or a proximity of each component 102 along a first axis, or X-axis 146, relative to sensor 140. At least one vertical proximity sensor 142 is positioned in close proximity to each component 102 to detect a position and/or a proximity of each component 102 along a second axis, or Y-axis 148, relative to sensor 142. While FIGs. 2A-2C illustrate X-axis 146 oriented along a horizontal axis, and Y-axis 148 oriented along a vertical axis with respect to each component 102, it should be recognized that X-axis 146 and/or Y-axis 148 may be oriented along any suitable axis of each component 102 to enable monitoring system 130 to function as described herein. In the exemplary embodiment, X-axis 146 and Y-axis 148 are perpendicular to each other and each is perpendicular to centerline axis 118. Horizontal proximity sensors 140 and vertical proximity sensors 142 work in combination to detect the position of components 102 within a two-dimensional Cartesian reference plane 150, or X-Y plane 150, that is perpendicular to centerline axis 118. Horizontal proximity sensors 140 and vertical proximity sensors 142 transmit signals representative of the detected position of components 102 to monitor 132.

In the exemplary embodiment, rotation sensor 144 detects a rotation of component 102 positioned proximate sensor 144. More specifically, in the exemplary embodiment, rotation sensor 144 detects an indicia coupled to, or part of, an associated component 102 that may include, but is not limited to only including, a magnetic strip, a material that is different than a material of component 102, and/or a predefined mark or a notch (not shown) on component 102 during each revolution of component 102, or during a predefined portion of a revolution of component 102, as the mark or notch rotate past sensor 144. In the exemplary embodiment, rotation sensor 144 transmits signals (hereinafter referred to as "rotation detection signals" or "phase reference signals") representative of the detection of the mark or notch to monitor 132 to enable a rotational frequency of component 102 to be determined. Monitor 132 uses signals received from rotation sensor 144 to determine and/or calculate a common or absolute phase reference for other sensor signals.

Moreover, in the exemplary embodiment, monitoring system 130 monitors a plurality of components 102, such as a first component 152, a second component 154, and a third component 156. While three components 102 are illustrated in FIGs. 2A-2C, the present invention may be used with any number of components 102 included in rotating device 100 and/or any number of components 102 may be monitored by monitoring system 130. Moreover, in the exemplary embodiment, first, second, and third components 152, 154, and 156 are segments 136 of drive shaft 116.

A horizontal proximity sensor 140, a vertical proximity sensor 142, and/or a rotation sensor 144 is coupled to, or is positioned proximate to, component 102. More specifically, in the exemplary embodiment, a first horizontal proximity sensor 158, a first vertical proximity sensor 160, and rotation sensor 144 are positioned proximate to first component 152, and a second horizontal proximity sensor 164 and a second vertical proximity sensor 166 are positioned proximate to second component 154. Similarly, a third horizontal proximity sensor 170 and a third vertical proximity sensor 172 are positioned proximate to third component 156. Moreover, in the exemplary embodiment, each sensor 134 is synchronously sampled such that monitor 132 samples measurement signals from each sensor 134 at substantially the same time to facilitate synchronizing a display of data received from each sensor 134, as described more fully herein.

During operation, intake section 104 channels air towards compressor section 106. Compressor section 106 compresses the inlet air to a higher pressure and temperature and discharges the compressed air towards combustor section 108. Fuel is channeled from fuel assembly 124 to each combustor 122 wherein the fuel is mixed with the compressed air and ignited in combustor section 108. Combustor section 108 channels combustion gases to turbine section 110 wherein gas stream thermal energy is converted to mechanical rotational energy to drive compressor section 106 and/or generator 126 via drive shaft 116. Exhaust gases exit turbine section 110 and flow through exhaust section 112 to ambient atmosphere.

Monitoring system 130 monitors at least one condition of rotating device 100 and/or components 102. More specifically, in the exemplary embodiment, horizontal proximity sensors 140 sense a position of components 102 along X-axis 146, and vertical proximity sensors 142 sense a position of components 102 along Y-axis 148. Rotation sensor 144 senses a rotation of at least one component 102, and transmits a phase reference signal to monitor 132 for processing and/or display. For example, in the exemplary embodiment, the sensed position of components 102 along X-axis 146 may be used to determine and/or display a movement or a vibration of each component 102 with respect to horizontal proximity sensors 140, and the sensed position of components 102 along Y-axis 148 may be used to determine and/or display a movement or a vibration of each component 102 with respect to vertical proximity sensors 142.

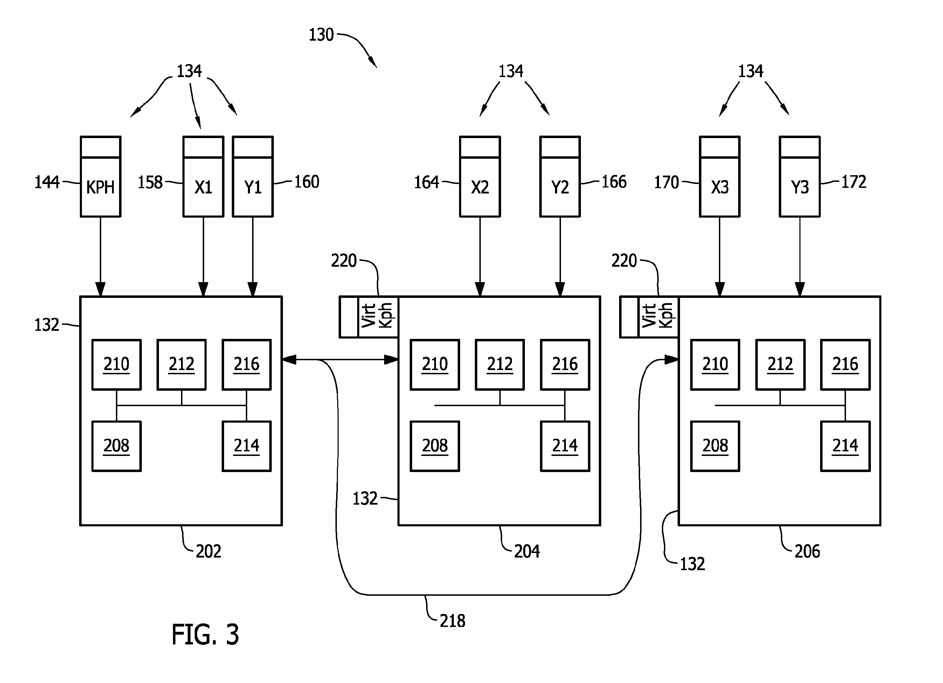

FIG. 3 is a block diagram of an exemplary monitoring system 130 that may be used with rotating device 100 (shown in FIG 1). In the exemplary embodiment, monitoring system 130 includes a plurality of monitors 132, such as a first monitor 202, a second monitor 204, and a third monitor 206, that are coupled in communication with sensors 134. For example, first monitor 202 is coupled to rotation sensor 144, first horizontal proximity sensor 158, and first vertical proximity sensor 160. Second monitor 204 is coupled to second horizontal proximity sensor 164 and second vertical proximity sensor 166, and third monitor 206 is coupled to third horizontal proximity sensor 170 and third vertical proximity sensor 172. While three monitors 132 are illustrated within FIG. 3, it should be recognized that any suitable number of monitors 132 may be included within monitoring system 130 to enable system 130 to function as described herein.

Each monitor 132 includes a processor 208 coupled to a memory device 210, a communication device 212, a timer 214, and an analog to digital converter (ADC) 216. Alternatively, one or more components, such as timer 214 and/or ADC 216, may be incorporated within another component, such as processor 208. Moreover, monitors 132 are coupled together via a network 218, such as a wired or a wireless Ethernet network.

Processor 208 may include, but is not limited to only including, a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The above examples are exemplary only, and thus are not intended to limit in any way the definition and/or meaning of the term processor.

In the exemplary embodiment, memory device 210 is one or more devices that enable information, such as executable instructions and/or other data, to be selectively stored and retrieved. Memory device 210 includes one or more computer readable media, such as, without limitation, dynamic random access memory (DRAM), static random access memory (SRAM), a solid state disk, and/or a hard disk.

Communication device 212 may include, without limitation, a wired network adapter, a wireless network adapter, and/or a mobile telecommunications adapter. Communication device 212 is coupled in communication with one or more remote devices, such as a server, a computer, and/or a communication device 212 of another monitor 132.

ADC 216 is communicatively coupled to sensors 134 associated with monitor 132. In the exemplary embodiment, each sensor 134 transmits an analog signal corresponding to a detected or measured characteristic of component 102, such as a detected position and/or rotational frequency of component 102. ADC 216 samples the analog measurement signal at a sampling rate to convert the analog measurement signal to a plurality of digital measurement values or samples. In the exemplary embodiment, the sampling rate is determined based on a phase reference signal received from rotation sensor 144, which is in turn based on the rotational frequency of rotating device 100 and/or component 102.

In the exemplary embodiment, timer 214 is a real-time clock or any other suitable timer that enables monitoring system 130 to function as described herein. Timer 214 continuously generates a value (hereinafter referred to as a "time value") representative of a current time or a time differential with respect to a time base. Processor 208 uses the time value to generate one or more timestamps for data received by processor 208, such as sensor measurement data received from ADC 216.

During operation, timers 214 of each monitor 132 are synchronized using a synchronization protocol, such as the Institute of Electrical and Electronics Engineers (IEEE) 1588-2002 or 1588-2008 protocol (also referred to as "Precision Time Protocol"). Alternatively, another synchronization protocol may be used, such as the Network Time Protocol. During the synchronization process, each timer 214 determines a time offset and a transmission latency between monitor 132 and a master clock (or timer) and/or other monitors 132. The time offset and the transmission latency are used to correlate and synchronize the time values produced by timer 214 of one monitor 132 (e.g., second monitor 204 or third monitor 206) with time values produced by timer 214 of another monitor 132 (e.g., first monitor 202). It should be recognized that the master clock or timer may be timer 214 of a monitor 132 or may be a clock or timer positioned in a remote device.

In the exemplary embodiment, rotation sensor 144 is coupled to first monitor 202 but not to second monitor 204 or third monitor 206. Accordingly, first monitor 202 receives a phase reference signal from rotation sensor 144 and timestamps the phase reference signal using a time value received from timer 214. First monitor 202 generates and transmits a phase reference synchronization message (or "synchronization message") to each other monitor 132 coupled to network 218, such as second monitor 204 and third monitor 206. The synchronization message includes a phase reference event indicative of the receipt of the phase reference signal at first monitor 202 and a timestamp of the phase reference event.

Second monitor 204 and third monitor 206 receive the synchronization message and use the synchronization message, or the phase reference event, as a virtual phase reference signal 220. Accordingly, second monitor 204 and third monitor 206 use the phase reference event and the timestamp of the phase reference event at ADC 216 to synchronously sample measurement data received by ADC 216 with respect to the rotational frequency of component 102 (shown in FIG. 1) and/or rotating device 100 (and/or the relative position thereof), and with respect to measurement data sampled at first monitor 202. Accordingly, the synchronization message enables each monitor 132 to sample measurement signals received from associated sensors 134 (e.g., horizontal proximity sensor 140 and vertical proximity sensor 142) synchronously with respect to similar sensor measurement signals sampled at each other monitor 132. Each sample of sensor data is timestamped by timer 214 of that monitor 132. The sensor data may be transmitted from each monitor 132 to one or more computing devices or diagnostic systems, via network 218 or another suitable medium, for further processing, analysis, and/or display.

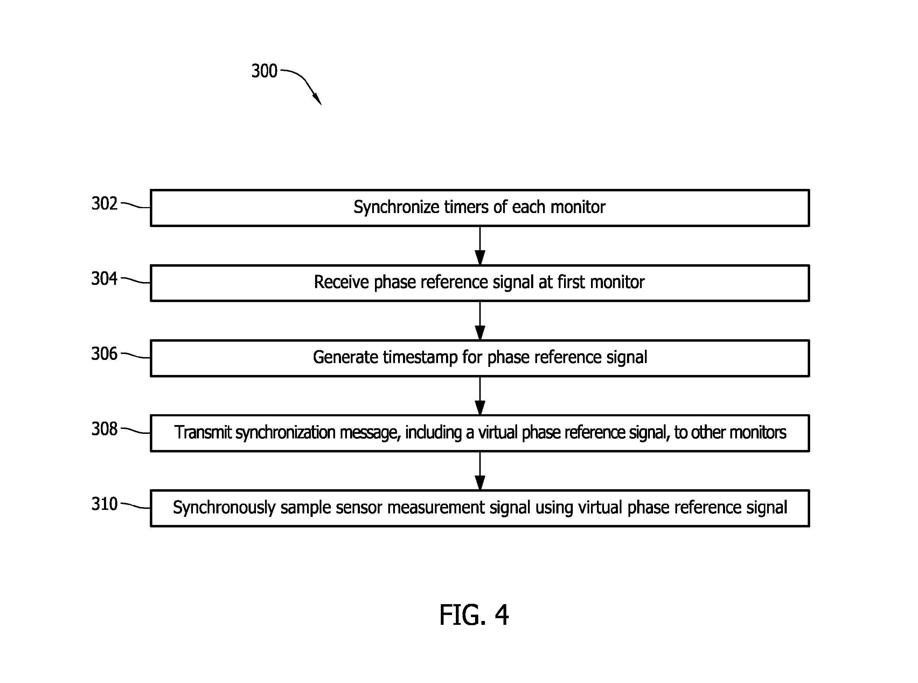

FIG. 4 is a flow diagram of an exemplary method 300 of monitoring operation of a rotating device, such as rotating device 100 (shown in FIG. 1). In an exemplary embodiment, method 300 is executed by monitors 132 of monitoring system 130 (both shown in FIG. 1), such as by processors 208 (shown in FIG. 3) of monitors 132.

In the exemplary embodiment, timers 214 (shown in FIG. 3) of each monitor 132 are synchronized 302 using a synchronization protocol, such as a Precision Time Protocol. More specifically, each monitor 132 includes a timer 214 that is used to timestamp data received by each monitor 132. For example, the sensor measurement signals received from sensors 134 coupled to each monitor 132 are sampled by an ADC 216 (shown in FIG. 3) within each monitor 132, and the data received from each ADC 216 is timestamped using timers 214.

A monitor 132 that is coupled to a rotation sensor 144, such as first monitor 202, receives 304 a phase reference signal from rotation sensor 144. First monitor 202 uses timer 214 to generate 306 a timestamp for (or "timestamp") the phase reference signal that is indicative of a time that the phase reference signal was received. Moreover, first monitor 202 generates a synchronization message, including a virtual phase reference signal 220 (i.e., the phase reference event), and transmits 308 the synchronization message to other monitors 132 coupled to first monitor 202 via network 218. More specifically, the synchronization message includes an indication that the phase reference signal was received (i.e., virtual phase reference signal 220) and the timestamp for the phase reference signal.

Each monitor 132 receiving the synchronization message uses virtual phase reference signal 220 within the synchronization message to synchronously sample 310 at least one measurement, such as a sensor measurement signal received from one or more sensors 134 (e.g., horizontal proximity sensor 140 and/or vertical proximity sensor 142) coupled to monitor 132. Moreover, a sampling rate of each ADC 216 (and thereby a sampling rate of each measurement signal received by monitor 132) is determined by virtual phase reference signal 220 included within the synchronization message. Accordingly, each monitor 132 coupled to first monitor 202 synchronously samples a respective measurement signal with respect to a sampling rate and time that first monitor 202 samples measurement signals received by first monitor 202 to provide a true condition of rotating device 100.

An exemplary technical effect of the methods, systems, and devices described herein includes at least one of (a) receiving, by a first monitor, a phase reference signal from a rotation sensor, wherein the phase reference signal is indicative of a phase of rotation of a rotating device; (b) generating, by a first monitor, a timestamp indicative of a time at which a phase reference signal was received; (c) generating, by a first monitor, a synchronization message including a timestamp associated with a phase reference signal and an indication that the phase reference signal was received; (d) receiving a synchronization message from a first monitor at a second monitor operatively coupled to the first monitor; and (e) synchronously sampling, by a second monitor, at least one measurement based on a synchronization message.

As described herein, a monitoring system is provided that includes a plurality of sensors that sense or detect a position of a plurality of components of a rotating device. The sensors transmit measurement signals to a plurality of monitors that process the signals. The monitors each include a timer that is synchronized with each other monitor timer by a synchronization protocol. Each monitor also includes an analog to digital converter (ADC) that samples the measurement signals and transmits data representative of the sampled measurement signals to a processor of the associated monitor. A first monitor that is coupled to a rotation sensor receives a phase reference signal from the rotation sensor indicative of a phase of rotation of the rotating device. The first monitor timestamps the receipt of the phase reference signal using an associated timer, and transmits a synchronization message to each other monitor. The synchronization message includes an indication that the phase reference signal was received by the first monitor and a time at which the phase reference signal was received. The synchronization message, or the indication that the phase reference signal was received, is used as a virtual phase reference signal by each receiving monitor. Accordingly, each monitor receiving the synchronization message uses the timestamp of the phase reference signal in conjunction with the indication that the phase reference signal was received to configure the ADC of the associated monitor to synchronously sample the measurement signals received by the monitor. Accordingly, a single rotation sensor may be used within the monitoring system while maintaining the ability to synchronously sample sensor data throughout a network of monitors.

The methods, devices, and systems described herein are not limited to the specific embodiments described herein. For example, components of each system and/or device and/or steps of each method may be used and/or practiced independently and separately from other components and/or steps described herein. In addition, each component and/or step may also be used and/or practiced with other systems, apparatus, and methods.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

While the invention has been described in terms of various specific embodiments, those skilled in the art will recognize that the invention may be practiced with modification within the scope of the appended claims.

Various aspects and embodiments of the present invention are defined by the following numbered clauses:
1. A monitoring system for use in monitoring operation of a rotating device, said monitoring system comprising:
   a first monitor comprising a first processor, said first monitor configured to:
      receive a phase reference signal from a rotation sensor, wherein the phase reference signal is indicative of a phase of rotation of the rotating device;
      generate a timestamp indicative of a time at which the phase reference signal was received; and
      generate a synchronization message including the timestamp and an indication that the phase reference signal was received; and
   a second monitor operatively coupled to said first monitor and comprising a second processor, said second monitor configured to:
      receive the synchronization message from said first monitor; and
      synchronously sample at least one measurement based on the synchronization message.
2. A monitoring system in accordance with clause 1, wherein said first monitor comprises a first timer configured to timestamp data received by said first monitor and wherein said second monitor comprises a second timer configured to timestamp data received by said second monitor.
3. A monitoring system in accordance with any preceding clause, wherein said first timer is substantially synchronized with said second timer using a synchronization protocol.
4. A monitoring system in accordance with any preceding clause, wherein a first sensor is coupled to said first monitor, said first monitor is configured to receive a first measurement signal from the first sensor representative of a first measured characteristic of the rotating device.
5. A monitoring system in accordance with any preceding clause, wherein a second sensor is coupled to said second monitor, said second monitor is configured to receive a second measurement signal from the second sensor representative of a second measured characteristic of the rotating device.
6. A monitoring system in accordance with any preceding clause, wherein said second monitor comprises an analog to digital converter (ADC), wherein said ADC is configured to sample the second measurement signal at a sampling rate based on the phase reference signal.
7. A monitoring system in accordance with any preceding clause, wherein said second monitor is configured to sample the second measurement signal synchronously with respect to said first monitor.
8. A monitoring system in accordance with any preceding clause, wherein said second monitor synchronizes the sampling of the second measurement signal with said first monitor using the synchronization message.
9. A monitor for use in monitoring operation of a rotating device, said monitor comprising:
   a communication device configured to receive a synchronization message including an indication that a phase reference signal was received and a timestamp indicative of a time at which the phase reference signal was received, wherein the phase reference signal is indicative of a phase of rotation of the rotating device; and
   a processor coupled to said communication device, said processor configured to:
      receive the synchronization message from said communication device; and
      synchronously sample a measurement signal based on the synchronization message, wherein the measurement signal is received from a sensor configured to measure a characteristic of the rotating device.
10. A monitor in accordance with any preceding clause, wherein said monitor comprises a timer configured to timestamp data received by said monitor.
11. A monitor in accordance with any preceding clause, wherein said timer is a first timer that is substantially synchronized with a second timer using a synchronization protocol.
12. A monitor in accordance with any preceding clause, wherein said monitor comprises an analog to digital converter (ADC), wherein said ADC is configured to synchronously sample the measurement signal at a sampling rate based on the phase reference signal.
13. A method of monitoring operation of a rotating device, said method comprising:
   receiving, by a first monitor, a phase reference signal from a rotation sensor, wherein the phase reference signal is indicative of a phase of rotation of the rotating device;
   generating, by the first monitor, a timestamp indicative of a time at which the phase reference signal was received;
   generating, by the first monitor, a synchronization message including the timestamp and an indication that the phase reference signal was received;
   receiving the synchronization message from the first monitor at a second monitor operatively coupled to the first monitor; and
   synchronously sampling, by the second monitor, at least one measurement based on the synchronization message.
14. A method in accordance with any preceding clause, wherein the first monitor includes a first timer and the second monitor includes a second timer, said method comprising:
   timestamping data received by the first monitor using the first timer; and
   timestamping data received by the second monitor using the second timer.
15. A method in accordance with any preceding clause, further comprising synchronizing the first timer with the second timer using a synchronization protocol.
16. A method in accordance with any preceding clause, wherein a first sensor is coupled to the first monitor, said method further comprising receiving a first measurement signal from the first sensor representative of a first measured characteristic of the rotating device.
17. A method in accordance with any preceding clause, wherein a second sensor is coupled to the second monitor, said method further comprising receiving a second measurement signal from the second sensor representative of a second measured characteristic of the rotating device.
18. A method in accordance with any preceding clause, further comprising sampling the second measurement signal at a sampling rate based on the phase reference signal.
19. A method in accordance with any preceding clause, further comprising sampling the second measurement signal synchronously with respect to the first monitor.
20. A method in accordance with any preceding clause, further comprising synchronizing the sampling of the second measurement signal with the first monitor using the synchronization message.

## Claims

1. A monitoring system (130) for use in monitoring operation of a rotating device (100), said monitoring system comprising:
a first monitor (202) comprising a first processor (208), said first monitor configured to:
receive a phase reference signal from a rotation sensor (144), wherein the phase reference signal is indicative of a phase of rotation of the rotating device;
generate a timestamp indicative of a time at which the phase reference signal was received; and
generate a synchronization message including the timestamp and an indication that the phase reference signal was received; and
a second monitor (204) operatively coupled to said first monitor and comprising a second processor, said second monitor configured to:
receive the synchronization message from said first monitor; and
synchronously sample at least one measurement based on the synchronization message.

2. A monitoring system (130) in accordance with Claim 1, wherein said first monitor (202) comprises a first timer (214) configured to timestamp data received by said first monitor and wherein said second monitor (204) comprises a second timer configured to timestamp data received by said second monitor.

3. A monitoring system (130) in accordance with Claim 2, wherein said first timer (214) is substantially synchronized with said second timer using a synchronization protocol.

4. A monitoring system (130) in accordance with Claim 1, 2 or 3, wherein a first sensor (134) is coupled to said first monitor (202), said first monitor is configured to receive a first measurement signal from the first sensor representative of a first measured characteristic of the rotating device (100).

5. A monitoring system (130) in accordance with Claim 4, wherein a second sensor (134) is coupled to said second monitor (204), said second monitor is configured to receive a second measurement signal from the second sensor representative of a second measured characteristic of the rotating device (100).

6. A monitoring system (130) in accordance with Claim 5, wherein said second monitor (204) comprises an analog to digital converter (ADC) (216), wherein said ADC is configured to sample the second measurement signal at a sampling rate based on the phase reference signal.

7. A monitoring system (130) in accordance with Claim 5 or Claim 6, wherein said second monitor (204) is configured to sample the second measurement signal synchronously with respect to said first monitor (202).

8. A monitoring system (130) in accordance with Claim 7, wherein said second monitor (204) synchronizes the sampling of the second measurement signal with said first monitor (202) using the synchronization message.

9. A monitor (132) for use in monitoring operation of a rotating device (100), said monitor comprising:
a communication device (212) configured to receive a synchronization message including an indication that a phase reference signal was received and a timestamp indicative of a time at which the phase reference signal was received, wherein the phase reference signal is indicative of a phase of rotation of the rotating device; and
a processor (208) coupled to said communication device, said processor configured to:
receive the synchronization message from said communication device; and
synchronously sample a measurement signal based on the synchronization message, wherein the measurement signal is received from a sensor (134) configured to measure a characteristic of the rotating device.

10. A monitor (132) in accordance with Claim 9, wherein said monitor comprises a timer (214) configured to timestamp data received by said monitor.

11. A monitor (132) in accordance with Claim 9 or Claim 10, wherein said timer is a first timer that is substantially synchronized with a second timer using a synchronization protocol.

12. A monitor (132) in accordance with Claim 9, 10 or 11, wherein said monitor comprises an analog to digital converter (ADC), wherein said ADC is configured to synchronously sample the measurement signal at a sampling rate based on the phase reference signal.

13. A method of monitoring operation of a rotating device, said method comprising:
receiving (304), by a first monitor, a phase reference signal from a rotation sensor, wherein the phase reference signal is indicative of a phase of rotation of the rotating device;
generating (306), by the first monitor, a timestamp indicative of a time at which the phase reference signal was received;
generating (308), by the first monitor, a synchronization message including the timestamp and an indication that the phase reference signal was received;
receiving the synchronization message from the first monitor at a second monitor operatively coupled to the first monitor; and
synchronously sampling (310), by the second monitor, at least one measurement based on the synchronization message.

14. A method in accordance with Claim 13, wherein the first monitor includes a first timer and the second monitor includes a second timer, said method comprising:
timestamping data received by the first monitor using the first timer; and/or
timestamping data received by the second monitor using the second timer.

15. A method in accordance with Claim 13 or Claim 14, further comprising synchronizing the first timer with the second timer using a synchronization protocol.
